Europäisches Patentamt

European Patent Office

Office européen des brevets

(11) Publication number: **0 079 701**
**B1**

(12) **EUROPEAN PATENT SPECIFICATION**

(45) Date of publication of patent specification: **30.07.86**

(51) Int. Cl.⁴: **F 16 B 45/02**

(21) Application number: **82305696.5**

(22) Date of filing: **27.10.82**

(54) Improvements in chain components.

(30) Priority: **02.11.81 GB 8132921**

(43) Date of publication of application:
**25.05.83 Bulletin 83/21**

(45) Publication of the grant of the patent:
**30.07.86 Bulletin 86/31**

(84) Designated Contracting States:
**AT BE CH DE FR GB IT LI LU NL SE**

(56) References cited:
**DE-U-7 837 363**
**GB-A-1 360 950**
**GB-A-1 430 543**
**GB-A-1 497 504**

(73) Proprietor: **PARSONS CONTROLS LIMITED**
**Stourport on Severn**
**Stourport Worcestershire DY13 9AT (GB)**

(72) Inventor: **Chell, Robert**
**Elderberry Close Lickhill Lodge Estate**
**Stourport-on-Severn Worcs. DY13 8TF (GB)**
Inventor: **Millington, Michael John**
**24 Kendlewood Road**
**Kidderminster Worcestershire DY10 2XQ (GB)**
Inventor: **Seeley, David Charles**
**24 Worcester Road**
**Stourport-on-Severn Worcestershire (GB)**
Inventor: **Smith, Ian David**
**9 Nursery Grove**
**Kidderminster Worcestershire (GB)**

(74) Representative: **Lewis, David Overington**
**c/o Babcock International plc Cleveland House**
**19 St. James's Square**
**London SW1Y 4LN (GB)**

Courier Press, Leamington Spa, England.

## Description

This invention relates to chain components and, more particularly, to a latch, or safety, hook for attachment to a length of a chain or wire rope.

GB—A—1430543 discloses a latch, or safety, hook including a hook body, having a bowl portion and a shank portion formed with a clevis end portion, and a latch carrying an end fitment positioned to pivot through a restricted arc about a fulcrum pin extending through the clevis end portion of the shank portion, the latch being formed with a catch face engageable by a detent face formed on a resiliently biassed trigger pivotable in an aperture in the shank portion at the clevis end portion about an axis perpendicular to the central axis of the shank portion, the detent face engaging the catch face with the latch closed against the bowl portion of the hook body to prevent rotation of the latch away from the bowl portion.

By the present invention there is provided a latch, or safety, hook in which the aperture in the shank portion extends through the shank portion in a direction parallel to the direction of the fulcrum pin and the resiliently biassed trigger pivots about a pivot pin having a central axis extending perpendicular to the axis of the fulcrum pin.

By such an arrangement, any force tending to open the hook when the detent face of the trigger is engaged with the catch face of the latch is transmitted across the trigger to edge faces of the aperture in the shank portion. Such an alignment of faces not only minimises wear between the various mating faces but also minimises any deleterious effects of such wear.

The invention will now be described, by way of example, with reference to the accompanying drawings, in which:—

Figure 1 is an elevation of a safety hook; and

Figure 2 is a cross-sectional view of a portion of the safety hook taken on the line II—II in Figure 1.

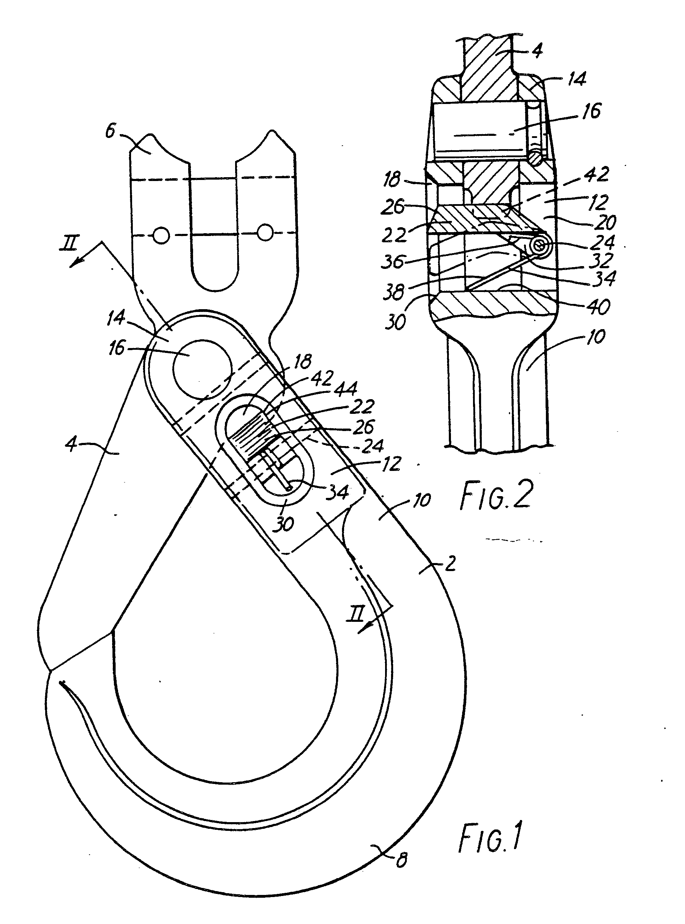

As shown in Figure 1, the safety hook includes a hook body 2 pivoted on a latch 4, an end portion of which, remote from the hook body, is formed as a clevis fitment 6 for attachment to an end link of an associated chain (not shown). The hook body 2 is formed with a bowl portion 8 having a semi-circular central axis and a shank portion 10 having a straight central axis forming a tangential continuation of the bowl portion. An end portion of the shank portion 10 remote from the bowl portion is enlarged slightly and bifurcated to form a clevis 12, locating the latch 4 between jaws 14 thereof with a fulcrum pin 16 passing through the jaws and the latch on an axis displaced to the side of the central plane of the clevis fitment 6 and the bowl portion 8 remote from the bifurcation. As shown in Figure 2, the bifurcation of the shank portion 10 to form the jaws 14 is spaced from the latch 4 and the jaws 14 are formed with aligned apertures 18, 20 extending through the shank portion in the said direction as the fulcrum pin 16. A cranked trigger bar 22 is mounted in the aperture 20 in one of the jaws 14 by means of a pivot pin 24 extending through the trigger bar and side portions of the jaw in a direction perpendicular both to the axis of the fulcrum pin and to the central axis of the shank portion. The end of the trigger bar 22 remote from the pivot pin 24 is formed with a chamfered edge 26 and extends substantially flush with the surface of the shank portion around the aperture 18 in the other of the jaws, the edge 30 of which aperture is chamfered to facilitate access to the trigger bar. A central portion 32 of the cranked trigger bar adjacent the pivot pin is cut away to accommodate a V spring 34 mounted on the pivot pin 24 with one arm 36 bearing against the underside of the cranked trigger bar 22 and the other arm 38 bearing on a face 40 on the shank portion intermediate the jaws, thereby biassing the trigger bar away from the face 40 of the bifurcation and towards the latch.

The latch 4, adjacent the fulcrum pin 16, is formed with a perpendicular step providing a catch face 42 extending on a displaced tangent to the fulcrum pin and parallel to the central plane of the shank portion 10. In the closed position of the latch 4, the catch face 42 engages with a detent face 44 formed on a side of the trigger bar 22 to prevent rotation about the fulcrum pin 16 of the latch 4 relative to the hook body 2, any torque being transmitted through the trigger bar 22 to the edge faces of the apertures 18, 20. Such an alignment of faces not only minimises wear between the various mating faces but also minimises any deleterious effects of such wear.

In operation, to pivot the hook body 2 through a limited arc relative to the latch 4, to open the mouth of the hook, the chamfered end 26 of the trigger bar 22 is moved downwardly, in the normal hanging orientation of the hook, by movement of an operator's thumb to the position shown in outline in Figure 2. Pivoting of the trigger bar 22 about the pivot pin 24 against the spring 34 disengages the detent face 44 of the trigger bar 22 from the catch face 42 of the latch 4 and thereby permits relative rotation between the latch and the hook body 2 to an open position. Closure of the hook is effected manually by virtue of the weight of the hook body or, more normally, by applying a lifting force through the clevis fitment on the latch with a load suspended on the hook. Upon the latch 4 closing against the bowl portion 8 the detent face 44 on the trigger bar 22 engages the catch face 42 on the latch, thereby preventing re-opening of the latch without movement of the trigger against the biassing spring.

It will be appreciated that the latch 4 may be formed with fitments other then the clevis fitment 6 for connecting to lift chains or ropes.

## Claims

1. A latch, or safety, hook including a hook body (2), having a bowl portion (8) and a shank portion (10) formed with a clevis end portion (12), and a latch (4) carrying an end fitment (6) positioned to pivot through a restricted arc about a fulcrum pin (16) extending through the clevis end portion of the shank portion, the latch being formed with a catch face (42) engageable by a detent face (44) formed on a resiliently biassed trigger (22) pivotable in an aperture (18, 20) in the shank portion at the clevis end portion about an axis perpendicular to the central axis of the shank portion, the detent face engaging the catch face with the latch closed against the bowl portion of the hook body to prevent rotation of the latch away from the bowl portion, characterised in that the aperture (18, 20) in the shank portion (10) extends through the shank portion in a direction parallel to the direction of the fulcrum pin (16) and the resiliently biassed trigger (22) pivots about a pivot pin (24) having a central axis extending perpendicular to the axis of the fulcrum pin (16).

2. A latch, or safety, hook as claimed in Claim 1, characterised in that a V spring (34) biasses the trigger (22) towards a position in which the detent face (44) engages the catch face (42).

3. A latch, or safety hook as claimed in Claim 1 or Claim 2, characterised in that a chamfered edge (26) of the trigger (22) extends substantially flush with the adjacent surface of the shank portion (10) around the associated aperture (18).

4. A latch, or safety, hook as claimed in Claim 3, characterised in that an edge (30) of the said aperture (18) is chamfered.

5. A latch, or safety, hook as claimed in any preceding claim characterised in that the trigger (22) has a cranked·form.

**Patentansprüche**

1. Sperr- oder Sicherungshaken mit einem Hakenkörper (2), der einen Krümmungsabschnitt (8) und einen mit einem Gabelendabschnitt (12) versehenen Schaftabschnitt (10) hat, und mit einer Klinke (4), die eine Endvorrichtung (6) trägt, die über einen begrenzten Bogen um einen sich durch den Gabelendabschnitt des Schaftabschnittes erstreckenden Schwenkzapfen (16) schwenkbar ist, wobei die Klinke mit einer Arretierfläche (42) versehen ist, die mit einer Haltefläche (44) in Eingriff bringbar ist, die an einem elastisch vorgespannten Auslöser (22) vorgesehen ist, der in einer Öffnung (18, 20) im Schaftabschnitt am Gabelendabschnitt um eine Achse senkrecht zur Mittelachse des Schaftabschnittes schwenkbar ist, wobei die Haltefläche mit der Arretierfläche bei gegenüber dem Krümmungsabschnitt des Hakenkörpers geschlossener Klinke in Eingriff steht, um die Verdrehung der Klinke weg vom Krümmungsabschnitt zur verhindern, dadurch gekennzeichnet, daß die Öffnung (18, 20) im Schaftabschnitt (10) sich durch den Schaftabschnitt parallel zur Richtung des Schwenkzapfens (16) erstreckt und der elastisch vorgespannte Auslöser (22) um einen Schwenkzapfen (24) schwenkbar ist, dessen Mittelachse sich senkrecht zur Achse des Schwenkzapfens (16) erstreckt.

2. Sperr- oder Sicherungshaken nach Anspruch 1, dadurch gekennzeichnet, daß eine V-förmige Feder (34) den Auslöser (22) gegen eine Lage vorspannt, in der die Haltefläche (44) mit der Arretierfläche (62) in Eingriff steht.

3. Sperr- oder Sicherungshaken nach Anspruch 1 oder 2, dadurch gekennzeichnet, daß ein abgeschrägter Rand (26) des Auslösers (22) mit der benachbarten Fläche des Schaftabschnittes (10) um die zugeordnete Öffnung (18) im wesentlichen in einer Ebene liegt.

4. Sperr- oder Sicherungshaken nach Anspruch 3, dadurch gekennzeichnet, daß ein Rand (30) der Öffnung (18) abgeschrägt ist.

5. Sperr- oder Sicherungshaken nach einem der vorhergehenden Ansprüche, dadurch gekennzeichnet, daß der Auslöser (22) eine gekröpfte Form hat.

**Revendications**

1. Crochet à loquet, ou de sûreté, comportant un corps de crochet (2) comprenant une partie-anse (8) et une partie-tige (10) présentant un tronçon terminal formant chape (12), et un loquet (4) portant un accessoire terminal (6) placé de façon à pivoter sur un arc restreint autour d'un axe d'articulation (16) traversant le tronçon terminal formant chape de la partie-tige, le loquet présentant une face d'arret (42) pouvant être rencontrée par une face de butée (44) formée sur un déclencheur sollicité élastiquement (22) articulé dans un trou (18, 20) ménagé dans la partie-tige au niveau du tronçon terminal formant chape autour d'un axe perpendiculaire à l'axe central de la partie-tige, la face de butée rencontrant la face d'arrêt alors que le loquet est fermé contre la partie-anse du corps de crochet pour empêcher le loquet de s'écarter par rotation de la partie-anse, caractérisé en ce que le trou (18, 20) de la partie-tige (10) s'étend à travers la partie-tige parallèlement à la direction de l'axe d'articulation (16) et le déclencheur sollicité élastiquement (22) pivote autour d'un tourillon (24) dont l'axe central s'étend perpendiculairement à l'axe géométrique de l'axe d'articulation (16).

2. Crochet à loquet, ou de sûreté, selon la revendication 1, caractérisé en ce qu'un ressort en V (34) sollicite le déclencheur (22) vers une position dans laquelle la face de butée (44) porte contre la face d'arrêt (42).

3. Crochet à loquet, ou de sûreté, selon la revendication 1 ou 2, caractérisé en ce qu'un bord chanfreiné (26) du déclencheur (22) s'étend sensiblement au ras de la surface adjacente de la partie-tige (10) entourant le trou associé (18).

4. Crochet à loquet, ou de sûreté, selon la revendication 3, caractérisé en ce qu'un bord (30) dudit trou (18) est chanfreiné.

5. Crochet à loquet, ou de sûreté, selon l'une quelconque des revendications précédentes, caractérisé en ce que le déclencheur (22) a une forme coudée.

FIG.1

FIG.2